# EUROPÄISCHE PATENTSCHRIFT

(11) **EP 3 047 899 B1**
(45) Veröffentlichungstag und Bekanntmachung des Hinweises auf die Patenterteilung: **15.04.2020**
(21) Anmeldenummer: 15203055.7
(22) Anmeldetag: 30.12.2015
(51) Int. Cl.: B01D 65/10, B67C 3/02

(54) **VERFAHREN ZUR ÜBERPRÜFUNG DER FUNKTIONSFÄHIGKEIT EINES MEMBRANFILTRATIONSMODULS UND FILTRATIONSANLAGE ZUM DURCHFÜHREN DES VERFAHRENS**
METHOD FOR CHECKING THE FUNCTIONALITY OF A MEMBRANE FILTRATION MODULE AND FILTRATION ASSEMBLY FOR CARRYING OUT THE METHOD
PROCEDE DE VERIFICATION DE LA CAPACITE DE FONCTIONNEMENT D'UN MODULE DE FILTRATION A MEMBRANE ET INSTALLATION DE FILTRATION DESTINEE A L'EXECUTION DU PROCEDE

(30) Priorität: 22.01.2015 DE 102015201051
(43) Veröffentlichungstag der Anmeldung: 27.07.2016
(73) Patentinhaber: Krones AG, 93073 Neutraubling (DE)
(72) Erfinder: Zacharias, Joerg, 93073 Neutraubling (DE); Scheu, Dirk, 93073 Neutraubling (DE)
(74) Vertreter: Grünecker Patent- und Rechtsanwälte PartG mbB

(56) Entgegenhaltungen:
- WO-A1-00/07008
- WO-A1-2006/026011
- WO-A1-2010/129144
- WO-A2-01/39870
- ADHAM S ET AL: "Monitoring the integrity of reverse osmosis membranes", DESALINATION, ELSEVIER, AMSTERDAM, NL, Bd. 119, Nr. 1-3, 20. September 1998 (1998-09-20), Seiten 143-150, XP004139114, ISSN: 0011-9164, DOI: 10.1016/S0011-9164(98)00134-9
- ANTONY A ET AL: "Removal efficiency and integrity monitoring techniques for virus removal by membrane processes", CRITICAL REVIEWS IN ENVIRONMENTAL SCIENCE AND TECHNOLOGY 2012 TAYLOR AND FRANCIS INC. USA, Bd. 42, Nr. 9, 2012, Seiten 891-933, XP002758765, DOI: 10.1080/10643389.2011.556539

## Beschreibung

Die Erfindung betrifft ein Verfahren zur Überprüfung der Funktionsfähigkeit eines Membranfiltrationsmoduls gemäß dem Oberbegriff des Anspruchs 1, eine Filtrationsanlage zum Durchführen des Verfahrens gemäß Anspruch 9 und eine Abfüllanlage mit der Filtrationsanlage gemäß Anspruch 10.

### Stand der Technik

Es ist bekannt im Rahmen der Membranfiltration die Funktionsfähigkeit bzw. die Unversehrtheit der Membran standardmäßig in einem Integrationstest zu überprüfen. Dabei wird zum Beispiel ein Membranmodul einseitig entleert und dann mit einem spezifischen Druck beaufschlagt. Dieser Druck wird im System eingeschlossen und über eine definierte Zeit beobachtet. Die Veränderung, in der Regel eine leichte Druckabnahme, wird beobachtet. Zum Bestehen des Integrationstests darf die Druckabnahme dabei einen Grenzwert nicht überschreiten.

Der Integrationstests ist nur vor oder nach einem Filtrationsprozesses möglich. Es gibt keinen Integrationstest, der während eines Filtrationsprozesses, d.h. online, durchgeführt werden kann. Somit gibt es keine Möglichkeit, zu jedem Zeitpunkt des Produktionsprozesses eine gültige Aussage zu machen, ob eine Membran funktionsfähig oder defekt ist. Eine Absicherung über eine korrekte Filtration kann nur im Nachhinein erhalten werden. Ein gefiltertes Produkt muss daher bis zu einer Bestätigung einer korrekten Filtration in Quarantäne bleiben oder in einem Puffertank zwischengespeichert werden.

EP 2 505 258 A2 offenbart ein Verfahren zum Überprüfen eines Membranfiltrationsmoduls einer Filtrationsanlage, wobei das Membranfiltrationsmodul ein Abzugsrohr für das Filtrat und ein Membranelement zum Filtern einer Flüssigkeit aufweist. Das Membranfiltrationsmodul wird mit einer Flüssigkeit befüllt, so dass das Membranelement vollständig in der Flüssigkeit eintaucht und dann wird in das Abzugsrohr Druckluft eingeleitet. Das Membranfiltrationsmodul kann zur Durchführung der Überprüfung in der Filtrationsanlage verbleiben. Austretende Luftblasen, die in der Flüssigkeit aufsteigen, liefern eine Aussage über Ort, Art und Stärke von möglichen Defekten des Membranelements.

EP 2 567 748 A1 offenbart ein Verfahren zum Prüfen der Integrität einer Hohlfasermembran, wobei ein steriles, monomolekulares Gas ins Innere der Hohlfasermembran eingebracht wird. Das Gas wird im Innern der Hohlfasermembran zu einem ersten Zeitpunkt mit einem Anfangsgasdruck beaufschlagt und zu einem zweiten Zeitpunkt wird der Druck des Gases gemessen, um einen Endgasdruck zu bestimmen.

Aus WO 00/07008 ist bekannt einen SPR-Sensor zur Analyse von Analyten in hochreinem Wasser zu verwenden, das für die Verwendung im Pharma- und Elektronikbereich vorgesehen ist. Ein Analyt kann hierbei eine einzelne chemische/biochemische Spezies oder eine Reihe chemisch/biochemischer Spezies und/oder Mischungen von Spezies sein.

WO 2006/026011 A1 offenbart ein Verfahren und eine Vorrichtung zum Überprüfen der Integrität von Separationsmodulen während deren Betrieb, d.h. während eines Filtrationsprozesses. Vorzugsweise wird die Konzentration des Problemstoffs sowohl im Zulauf als auch im Filtrat gemessen.

WO 01/39870 A2 betrifft die Bestimmung der Effizienz eines Filters während dessen Betrieb durch Hinzufügen einer Menge eines bekannten Feststoffs in den Zulauf vor den Filter und Messen der Menge des Feststoffs nach dem Filter. Da die Menge des hinzugefügten Feststoffs bekannt ist, kann eine Messung der Anzahl der Partikel in dem Fluss vor dem Filter entfallen.

WO 2010/129144 A1 offenbart ein Verfahren zum Testen der Integrität von Membranen, wobei Partikel in kurzen Impulsen (5 bis 10 Sekunden) in den Zulauf eingebracht werden, oder eine konstante Konzentration über einen längeren Zeitraum (30 Minuten) vorgesehen ist. Die Messung der Partikel in dem Filtrat kann qualitativ, quantitativ, oder beides sein.

Der Artikel "Monitoring the integrity of reverse osmosis membranes" von S. Adham et al. (Desalination, Elsevier, Amsterdam, NL; Bd. 119, Nr. 1 - 3, Seiten 143 - 150; 21. - 24. September 1998; ISSN: 0011-9164) offenbart eine indirekte Überwachung einer UmkehrosmoseMembran durch ein Zählen von Partikeln während des Betriebs des Moduls.

Der Artikel "Removal Efficiency and Integrity Monitoring Techniques for Virus Removal by Membrane Processes" von A. Antony et al. (Critical Reviews in Environmental Science and Technology; Taylor & Francis Group, LLC, USA; Bd. 42, Nr. 9, Seiten 891 - 933, 2012; ISSN: 1064-3389) offenbart, dass regelmäßige indirekte Tests des Filtrats durchgeführt werden können, um die Membranintegrität zu überwachen. Es findet eine Überwachung der Anzahl von Partikeln basierend auf einer dynamischen Lichtverdunkelung statt.

### Aufgabe

Die Aufgabe der Erfindung besteht darin, ein Verfahren und eine Vorrichtung zur Verfügung zu stellen, die eine Überprüfung eines Membranfiltrationsmoduls während eines Filtrationsprozesses ermöglichen.

### Lösung

Die Aufgabe wird gelöst durch das Verfahren nach Anspruch 1, die Filtrationsanlage nach Anspruch 9 und die Abfüllanlage nach Anspruch 10. Bevorzugte Ausführungsformen und Weiterbildungen sind in den Unteransprüchen offenbart.

In dem Verfahren zur Überprüfung der Funktionsfähigkeit eines Membranfiltrationsmoduls in einer Filtrationsanlage wird zumindest ein Filtrat während eines Filtrationsprozesses einer Flüssigkeit mittels eines filtratseitigen Oberflächenplasmonenresonanz-Sensors überprüft.

Ein Oberflächenplasmonenresonanz-Sensor wird im Folgenden auch als SPR-Sensor bezeichnet, nach dem englischen Ausdruck "Surface Plasmon Resonance". Mittels der Oberflächenplasmonenresonanz können Prozesse an Grenzflächen von Metall des SPR-Sensors und Flüssigkeit, in die der SPR-Sensor eingebracht ist, sowie in einem Übergangsbereich zwischen Metall und Flüssigkeit untersucht werden. Die quantisierten Dichteschwankungen von Elektronen in Halbleitern oder Metallen werden als Plasmonen bezeichnet, wobei bei Oberflächenplasmonen die quantisierten Dichteschwankungen parallel zur Oberfläche des Metalls erzeugt werden. Die Wellenlänge der Oberflächenplasmonen reagiert auf Veränderungen des Brechungsindexes in der unmittelbaren Nähe der Metalloberfläche. Die Oberflächenplasmonen werden an der Grenzfläche Metall/Flüssigkeit angeregt und im reflektierten Licht wellenlängenabhängig detektiert. Die Resonanzwellenlänge der Oberflächenplasmonen verschiebt sich in Abhängigkeit des Brechungsindexes der Flüssigkeit. Somit kann das Vorhandensein bestimmter Stoffe in der Flüssigkeit überprüft werden.

Für das erfindungsgemäße Verfahren können gängige SPR-Sensoren, vorzugsweise mit Goldfilm, verwendet werden. Auch die Datenauslesesoftware und Datenverarbeitungssoftware des SPR-Sensors können gängige Software sein.

Der SPR-Sensor ist als Matrix aufgebaut, so dass er mehrere verschiedene Stoffe detektieren kann, d.h. für diese Stoffe sensitiv ist, wodurch es möglich ist, die Konzentration der mehreren Stoffe zu messen. Im Allgemeinen wird für die verschiedenen gemessenen Stoffe ein gemeinsamer Ausgabewert für die Stoffkonzentration erstellt.

Vorteilhaft ist es, wenn die Konzentrationsbereiche für die verschiedenen zu messenden Stoffe in etwa, d.h. zum Beispiel ±30%, insbesondere ±10%, bekannt sind, so dass ein SPR-Sensor für das Verfahren verwendet werden kann, der in diesen Konzentrationsbereichen messen kann.

Die Stoffkonzentration von einem oder mehreren Stoffen kann mit einer Zeitinformation gemessen werden, so dass ein Verhalten der Stoffkonzentration in Abhängigkeit von der Zeit gemessen werden kann.

Eine positive Funktionsfähigkeit des Membranfiltrationsmoduls ergibt sich, wenn alle Fasern des Moduls intakt sind, so dass eine ordnungsgemäße Filtration der Flüssigkeit möglich ist.

Eine negative Funktionsfähigkeit des Membranfiltrationsmoduls ergibt sich, wenn eine oder mehrere Fasern des Moduls defekt sind, so dass keine ordnungsgemäße Filtration der Flüssigkeit möglich ist. Das bedeutet, dass Stoffe aus dem Unfiltrat das Modul in einer Menge bzw. Konzentration passieren können, die nicht erwünscht ist und so diese Menge bzw. Konzentration in das Filtrat gelangen kann.

Insgesamt lässt sich durch die Wirkung des Moduls auf das Unfiltrat anhand einer Untersuchung zumindest des Filtrats die Funktionsfähigkeit des Moduls überprüfen. Bei einer bekannten und konstanten Zusammensetzung des Unfiltrats ist eine Untersuchung des Filtrats ausreichend. Ist die Zusammensetzung des Unfiltrats variabel, so ist es sinnvoll, sowohl das Filtrat als auch das Unfiltrat zu untersuchen.

Da in dem Verfahren zur Überprüfung der Funktionsfähigkeit eines Membranfiltrationsmoduls ein filtratseitiger SPR-Sensor verwendet wird, um zumindest das Filtrat einer Flüssigkeit zu untersuchen, kann die Überprüfung der Funktionsfähigkeit eines Membranfiltrationsmoduls während des Filtrationsprozesses stattfinden. Es ist also nicht erforderlich, den Filtrationsprozess zu unterbrechen, um eine Überprüfung der Funktionsfähigkeit des Membranfiltrationsmoduls vorzunehmen.

Das Verfahren umfasst weiter ein Messen einer Stoffkonzentration mindestens eines Stoffes des Filtrats mittels des filtratseitigen SPR-Sensors. Es können vorzugsweise die Stoffkonzentrationen der Oxide und Hydroxide von Eisen, Mangan und/oder Arsen gemessen werden.

Das Verfahren umfasst weiter ein Messen einer Stoffkonzentration des mindestens einen Stoffes des Unfiltrats mittels eines unfiltratseitigen SPR-Sensors. Auch im Unfiltrat können drei Stoffkonzentrationen SK1_{U}, SK2_{U}, SK3_{U} gemessen werden. Vorteilhafterweise werden für das Filtrat und das Unfiltrat jeweils die Stoffkonzentrationen für die gleichen Stoffe gemessen, so dass eine Differenzbestimmung der Stoffkonzentrationen und/oder eine Berechnung von Filtrat- und/oder Differenzgrenzwert möglich sind.

Durch Messen dieser Stoffkonzentration kann überprüft werden, ob sich die Menge des Stoffes im Unfiltrat während des Filtrationsprozess ändert oder gleich bleibt. Da auch ein intaktes Membranfiltrationsmoduls einen gewissen Prozentsatz des Stoffes passieren lässt, kann es vorteilhaft sein, sich ändernde Verhältnisse des Unfiltrats zu kennen. So kann bei einem Anstieg der gemessenen Stoffkonzentration des Filtrats zunächst überprüft werden, ob auch ein Anstieg der gemessenen Stoffkonzentration des Unfiltrats vorliegt, bevor ein Defekt des Membranfiltrationsmoduls vermutet wird.

Das Verfahren kann weiter ein Ermitteln umfassen, ob die Stoffkonzentration des Filtrats über einem Filtratgrenzwert liegt und wenn ja, Ausgeben eines Warnsignals und/oder Stoppen des Filtrationsprozesses. Ein Filtratgrenzwert kann durch ein Datenblatt des Membranfiltrationsmoduls vorgegeben sein, das angibt, welche Stoffe und welche Stoffkonzentrationen im Filtrat nach Passieren eines intakten Membranfiltrationsmoduls vorkommen können.

Beispielsweise werden drei Stoffkonzentrationen SK1_{F}, SK2_{F}, SK3_{F} des Filtrats gemessen. Für jeden der drei Stoffe S1, S2, S3 kann es einen zugehörigen Filtratgrenzwert GW1_{F}, GW2_{F}, GW3_{F} geben, mit dem die gemessenen Stoffkonzentrationen SK1_{F}, SK2_{F}, SK3_{F} jeweils verglichen werden. So lässt sich ermitteln, ob eine oder zwei oder alle drei Stoffkonzentrationen SK1_{F}, SK2_{F}, SK3_{F} über den zugehörigen Filtratgrenzwerten GW1_{F}, GW2_{F}, GW3_{F} liegen oder nicht.

Wenn ein Filtratgrenzwert überschritten wird, hat das Membranfiltrationsmodul nicht die gewünschte bzw. erforderliche Menge des Stoffs zurückgehalten, dessen Anteil im Filtrat gemessen wurde, so dass davon auszugehen ist, dass das Membranfiltrationsmodul defekt ist, also seine Funktionsfähigkeit nicht gegeben ist. Dementsprechend kann ein Warnsignal ausgegeben werden, das beispielsweise darauf hinweist, dass die Sterilität des Filtrats nicht mehr gegeben ist. Da eine mittels des defekten Membranfiltrationsmoduls gefilterte Flüssigkeit nicht verwendet werden kann, kann der Filtrationsprozess gestoppt werden, um nicht mehr Ausschuss zu produzieren.

Wenn der Filtratgrenzwert nicht überschritten wird, kann der Filtrationsprozess unverändert aufrecht erhalten bleiben, da die Funktionsfähigkeit des Membranfiltrationsmoduls gesichert ist und die mittels des intakten Membranfiltrationsmoduls gefilterte Flüssigkeit weiter verwendet werden kann.

Das Verfahren kann weiter ein Ermitteln einer Differenz zwischen der Stoffkonzentration des Filtrats und der Stoffkonzentration des Unfiltrats kann weiter ein anschließendes Ermitteln umfassen, ob diese Differenz über einem Differenzgrenzwert liegt und wenn ja, Ausgeben eines Warnsignals und/oder Stoppen des Filtrationsprozesses.

Wurden drei Stoffkonzentrationen SK1_{F}, SK2_{F}, SK3_{F} des Filtrats und drei Stoffkonzentrationen SK1_{U}, SK2_{U}, SK3_{U} gemessen, so kann es für jeden der drei Stoffe S1, S2, S3 einen zugehörigen Differenzgrenzwert geben,
Das ausgegebene Warnsignal kann Informationen enthalten, die darauf hinweisen, dass die Sterilität des Filtrats nicht mehr gegeben ist. Da eine mittels des defekten Membranfiltrationsmoduls gefilterte Flüssigkeit nicht verwendet werden kann, kann der Filtrationsprozess gestoppt werden, um nicht mehr Ausschuss zu produzieren.

Weiterhin kann das Verfahren ein Berechnen eines Filtratgrenzwerts basierend auf der gemessenen Stoffkonzentration des Filtrats und der gemessenen Stoffkonzentration des Unfiltrats und/oder ein Berechnen eines Differenzgrenzwerts basierend auf der gemessenen Stoffkonzentration des Filtrats und der gemessenen Stoffkonzentration des Unfiltrats umfassen. Somit können die Grenzwerte, die für die Klassifizierung eines intakten oder eines defekten Membranfiltrationsmoduls verwendet werden, an die Umgebungsbedingungen, d.h. die vorhandenen Stoffkonzentrationen im Unfiltrat bzw. Filtrat angepasst werden.

Das Verfahren kann ein Verwenden des berechneten Filtratgrenzwerts und/oder des berechneten Differenzgrenzwerts für die Untersuchung zumindest des Filtrats während des Filtrationsprozesses mittels des filtratseitigen SPR-Sensors umfassen. Durch die Aktualisierung der Grenzwerte während des Untersuchungsprozesses zumindest des Filtrats können Änderungen in der Stoffkonzentration des Unfiltrats berücksichtigt werden.

Das Verfahren kann weiter ein Zugeben eines Tracers in das Unfiltrat umfassen. Als Tracer werden im Allgemeinen solche Stoffe angesehen, die bei intaktem Membranfiltrationsmodul vollständig im Unfiltrat verbleiben. Nur im Falle eines defekten Membranfiltrationsmoduls gelangt der Tracer in das Filtrat. Vorzugsweise wird ein Tracer zugegeben, wenn im Unfiltrat keine Stoffe vorhanden sind, die durch den SPR-Sensor zurückgehalten und somit detektiert werden könnten.

Das Verfahren kann weiter ein Messen einer Tracerkonzentration des Filtrats mittels des filtratseitigen SPR-Sensors umfassen. Der Schritt des Messens der Tracerkonzentration erfolgt, sowohl, wenn Tracer im Filtrat vorhanden ist als auch, wenn kein Tracer im Filtrat vorhanden ist. Im ersten Fall weicht dann die Höhe des Traceranteils von Null ab, während im zweiten Fall die Tracerkonzentration Null ist. Die Bezeichnung "Tracerkonzentration" kann einen Prozentsatz der Menge des Tracers beschreiben, die in das Unfiltrat eingegeben wurde.

Das Verfahren kann weiter ein Ausgeben eines Warnsignals und/oder ein Stoppen des Filtrationsprozesses umfassen, wenn eine Tracerkonzentration ungleich Null in dem Filtrat gemessen wurde. Da es sich bei dem Tracer um einen Stoff handelt, der nur im Falle eines defekten Membranfiltrationsmoduls in das Filtrat gelangt, ergibt sich unabhängig von der Höhe der gemessenen Tracerkonzentration im Filtrat, dass das Membranfiltrationsmodul defekt ist. Es ist daher nicht erforderlich, die gemessene Tracerkonzentration mit einem Grenzwert zu vergleichen. Wenn die Tracerkonzentration im Filtrat ungleich Null ist, ist die Funktionsfähigkeit des Membranfiltrationsmoduls nicht mehr gegeben.

Dementsprechend kann ein Warnsignal ausgegeben werden, das beispielsweise darauf hinweist, dass die Sterilität des Filtrats nicht mehr gegeben ist. Da eine mittels des defekten Membranfiltrationsmoduls gefilterte Flüssigkeit nicht verwendet werden kann, kann der Filtrationsprozess gestoppt werden, um nicht mehr Ausschuss zu produzieren.

Insbesondere besteht das Unfiltrat mindestens zu 70%, insbesondere zu mindestens 90%, aus Wasser.

In einer weiteren Ausführungsform handelt es sich beim Unfiltrat um ein Getränk bzw. eine Vorstufe davon, insbesondere um Bier oder Saft, es kann sich alternativ aber auch um ein medizinisches Produkt oder eine Vorstufe davon handeln.

Insbesondere wird aus dem Filtrat im weiteren Verlauf des Verfahrens ein Getränk hergestellt und/oder es wird in Getränkeflaschen abgefüllt.

Eine Filtrationsanlage zum Durchführen des Verfahrens wie oben oder weiter unten beschrieben umfasst ein Membranfiltrationsmodul und einen filtratseitigen SPR-Sensor zum Überprüfen eines Filtrats während eines Filtrationsprozesses einer Flüssigkeit. Mittels des filtratseitigen SPR-Sensors kann das Filtrat überprüft werden und anhand dieser Überprüfung kann auf die Funktionsfähigkeit des Membranfiltrationsmoduls rückgeschlossen werden, so dass ebenfalls eine Überprüfung der Funktionsfähigkeit eines Membranfiltrationsmoduls erfolgt.

Die Filtrationsanlage umfasst weiter einen unfiltratseitigen SPR-Sensor. Somit können Stoffkonzentration und/oder Tracerkonzentration des Unfiltrats gemessen werden.

Die Erfindung umfasst auch eine Abfüllanlage, insbesondere eine Getränkeabfüllanlage, mit einer wie oben oder weiter unten beschriebenen Filtrationsanlage und mit einer Abfüllmaschine zur Abfüllung von Behältern, insbesondere Getränkebehältern wie Fässern oder Flaschen, wobei die Abfüllmaschine und die Filtrationsanlage verbunden sind und wobei das Filtrat oder das aus dem Filtrat hergestellte Produkt, insbesondere Getränk, über ein Rohr aus der Filtrationsanlage der Abfüllmaschine zugeführt wird.

Gegebenenfalls kann neben dem Rohr noch ein Tank, insbesondere ein Zwischenlagertank, zwischen der Abfüllmaschine und der Filtrationsanlage angeordnet sein. Das Filtrat bzw. das aus dem Filtrat hergestellte Produkt wird in dem Fall über das Rohr in den Tank befördert und mit einem weiteren Rohr aus dem Tank zu der Abfüllanlage befördert.

Die Abfüllmaschine kann ein um eine vertikale Drehachse rundlaufendes Karussell mit einer Vielzahl von baugleichen Abfüllstationen umfassen, die entlang des Umfangs des Karussells angeordnet sind. Die Drehachse steht senkrecht zu einer horizontalen Ebene. Dies ist insbesondere im Hochleistungsbereich von Vorteil.

Denkbar wäre auch, für die Abfüllung eine stationär angeordnete Abfüllmaschine einzusetzen, insbesondere bei der Abfüllung von Fässern.

Die beigefügten Figuren stellen beispielhaft zum besseren Verständnis und zur Veranschaulichung Aspekte der Erfindung dar. Es zeigt:
Figur 1 eine schematische Ansicht einer Filtrationsanlage mit einem funktionierenden Membranfiltrationsmodul,
Figur 2 eine schematische Ansicht einer Filtrationsanlage mit einem defekten Membranfiltrationsmodul,
Figur 3 ein Verfahren zur Überprüfung der Funktionsfähigkeit eines Membranfiltrationsmoduls und
Figur 4 ein Verfahren zum Berechnen eines Filtrat- und/oder Differenzgrenzwerts.

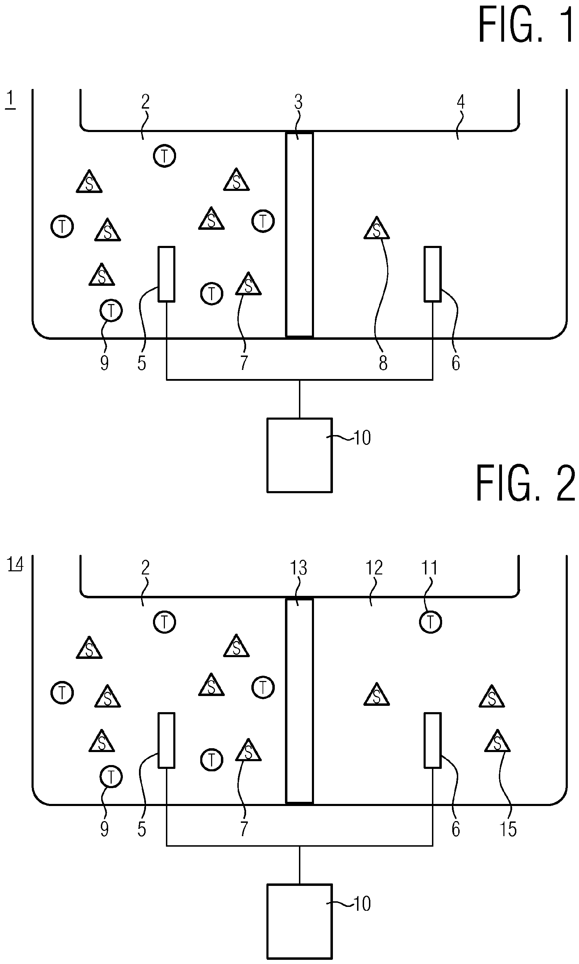

Figur 1 zeigt eine schematische Ansicht einer Filtrationsanlage 1 mit einem funktionierenden Membranfiltrationsmodul 3. Das Membranfiltrationsmodul 3 kann hierbei Hohlfasermembranen oder andere Membranen umfassen. Auf der einen Seite des Membranfiltrationsmoduls 3 befindet sich das Unfiltrat 2, das eine Stoffkonzentration 7 und eine Tracerkonzentration 9 enthält. In der Figur 1 besteht die Stoffkonzentration 7 aus den sechs schematisch dargestellten Stoffteilchen S und die Tracerkonzentration 9 aus den fünf schematisch dargestellten Tracerteilchen T. Die Stoffkonzentration 7 und die Tracerkonzentration 9 des Unfiltrats 2 werden mit einem unfiltratseitigen SPR-Sensor 5 gemessen. Alternativ kann auch vorgesehen sein, dass jeweils mindestens ein SPR-Sensor für die Messung der Stoffkonzentration 7 bzw. der Tracerkonzentration 9 vorgesehen ist.

Die Ergebnisse der Messung oder der Messungen des SPR-Sensors 5 können an eine Auswertevorrichtung 10, beispielsweise einen Computer, und/oder an einen Datenspeicher weitergeleitet werden, so dass sie für eine Analyse zur Verfügung stehen.

Auf der anderen Seite des Membranfiltrationsmoduls 3 befindet sich das Filtrat 4, welches das Membranfiltrationsmodul 3 passiert hat. Das Filtrat 4 wird mittels eines filtratseitigen SPR-Sensors 6 untersucht. In der Figur 1 weist das Filtrat 4 eine Stoffkonzentration 8 auf, die aus dem einen schematisch dargestellten Stoffteilchen S besteht. Im Filtrat 4 befindet sich keine Tracerkonzentration, so dass deren Anteil Null ist. Die Stoffkonzentration 9 des Filtrats 4 wird mit dem filtratseitigen SPR-Sensor 6 gemessen. Die Ergebnisse der Messung oder der Messungen des filtratseitigen SPR-Sensors können an die Auswertevorrichtung 10 und/oder an den Datenspeicher weitergeleitet werden, so dass sie für eine Analyse zur Verfügung stehen.

Aus der Stoffkonzentration 8 des Filtrats 4 kann nun auf die Funktionsfähigkeit des Membranfiltrationsmoduls 3 rückgeschlossen werden. Da für das Membranfiltrationsmodul 3 als bekannt vorausgesetzt werden kann, beispielsweise aus einem Datenblatt des Membranfiltrationsmoduls 3, welcher Anteil des Stoffs bei einem intakten Membranfiltrationsmodul 3 nach Filterung des Unfiltrats 2 im Filtrat 4 vorzufinden ist, ist eine Klassifizierung in "intakt" oder "defekt" möglich. Ist der Anteil des Stoffs, der bei einem intakten Membranfiltrationsmodul 3 nach Filterung des Unfiltrats 2 im Filtrat 4 vorzufinden ist, beispielsweise als ≤ 20% bekannt, so ergibt sich, dass die Funktionalität des dargestellten Membranfiltrationsmoduls 3 gegeben ist. Für manche Stoffe ist die Stoffkonzentration in dem Filtrat 4 vorzugsweise 0%.

Bei einer bekannten Stoffkonzentration 7 des Unfiltrats 2 kann diese Analyse allein anhand der Messung der Stoffkonzentration 8 des Filtrats 4 vorgenommen werden.

Ist die Stoffkonzentration 7 des Unfiltrats 2 veränderlich, so ist es für die Analyse erforderlich, dass sowohl die Messung der Stoffkonzentration 7 des Unfiltrats 2 als auch die Messung der Stoffkonzentration 8 des Filtrats 4 berücksichtigt werden.

Figur 2 zeigt eine schematische Ansicht einer Filtrationsanlage 14 mit einem defekten Membranfiltrationsmodul 13. Das Membranfiltrationsmodul 13 kann hierbei Hohlfasermembranen oder andere Membranen umfassen. Wie in der Figur 1 befindet sich in der Filtrationsanlage 14 auf der einen Seite des Membranfiltrationsmoduls 13 das Unfiltrat 2, das eine Stoffkonzentration 7 und eine Tracerkonzentration 9 enthält. Die Stoffkonzentration 7 und die Tracerkonzentration 9 des Unfiltrats 2 werden mit dem bereits bekannten unfiltratseitigen SPR-Sensor 5 gemessen.

Wie in der Figur 1 können die Ergebnisse der Messung oder der Messungen des SPR-Sensors 5 an die Auswertevorrichtung 10 und/oder an den Datenspeicher weitergeleitet werden.

Auf der anderen Seite des Membranfiltrationsmoduls 13 befindet sich das Filtrat 12, welches das Membranfiltrationsmodul 13 passiert hat. Das Filtrat 12 wird mittels eines filtratseitigen SPR-Sensors 6 untersucht. In der Figur 2 weist das Filtrat 12 eine Stoffkonzentration 15 auf, die aus den drei schematisch dargestellten Stoffteilchen S besteht. Im Filtrat 12 befindet sich zudem eine Tracerkonzentration 11, die aus dem einen schematisch dargestellten Tracerteilchen T besteht. Die Stoffkonzentration 15 und die Tracerkonzentration 11 des Filtrats 12 werden mit dem filtratseitigen SPR-Sensor 6 gemessen. Da die Tracerkonzentration 11 des Filtrats 12 ungleich Null ist, ergibt sich, dass das Membranfiltrationsmodul 13 defekt ist, d.h. seine Funktionsfähigkeit ist nicht mehr gegeben.

Alternativ kann auch vorgesehen sein, dass jeweils mindestens ein SPR-Sensor für die Messung der Stoffkonzentration 15 bzw. der Tracerkonzentration 11 des Filtrats 12 vorgesehen ist.

Die Ergebnisse der Messung oder der Messungen des filtratseitigen SPR-Sensors 6 können an die Auswertevorrichtung 10 und/oder an den Datenspeicher weitergeleitet werden, so dass sie für eine Analyse zur Verfügung stehen.

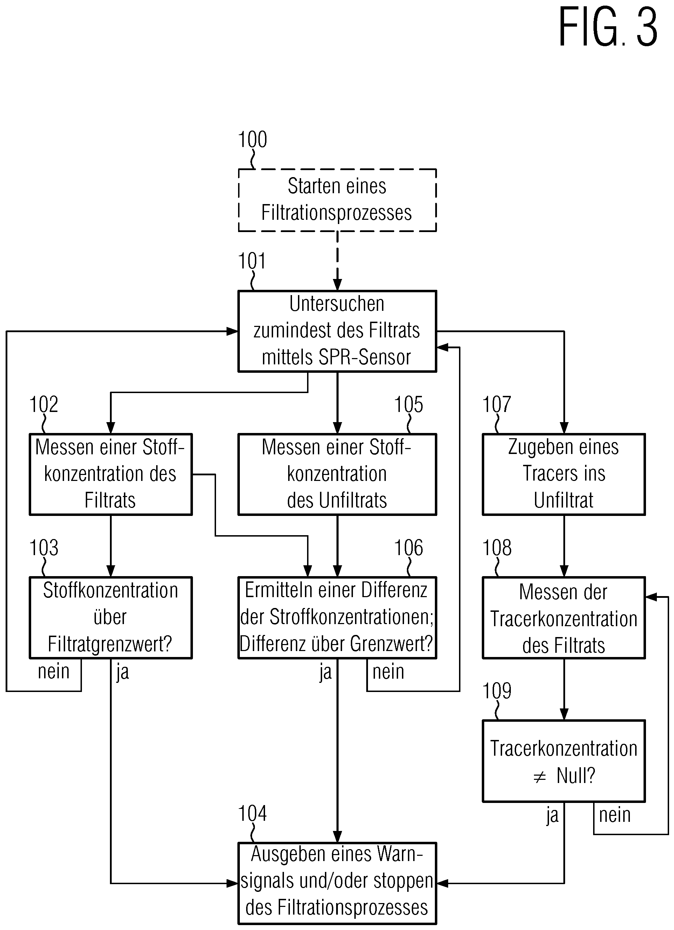

Figur 3 zeigt ein Verfahren zur Überprüfung der Funktionsfähigkeit eines Membranfiltrationsmoduls. In einem optionalen Schritt 100 kann ein Filtrationsprozess gestartet werden. Das Verfahren kann aber auch in einem schon laufenden Filtrationsprozess verwendet werden.

Im Schritt 101 beginnt das Untersuchen zumindest eines Filtrats während eines Filtrationsprozesses einer Flüssigkeit mittels eines filtratseitigen SPR-Sensors.

Im Schritt 102 wird eine Stoffkonzentration des Filtrats mittels des filtratseitigen SPR-Sensors gemessen. Es kann vorgesehen sein, dass für mehrere Stoffe jeweils die Stoffkonzentration des Filtrats gemessen wird.

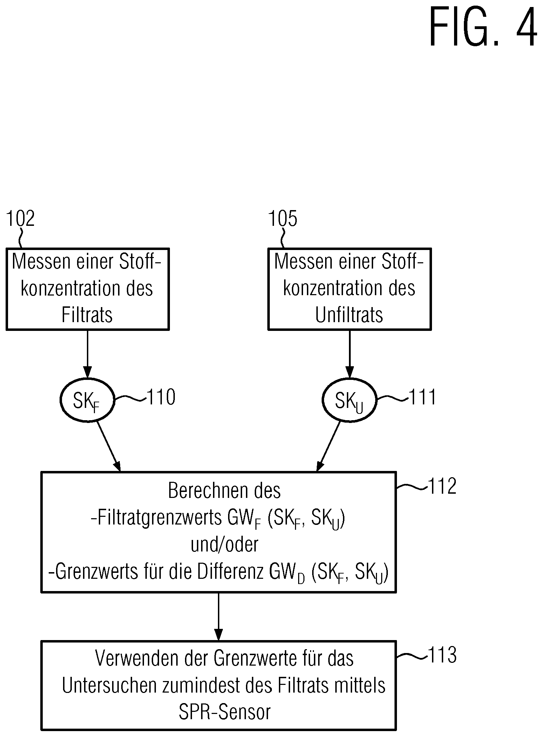

Im Schritt 103 wird ermittelt, ob die Stoffkonzentration des Filtrats über einem Filtratgrenzwert liegt. Der Filtratgrenzwert kann hierbei fest vorgegeben sein oder er kann anhand aktueller Messwerte aktualisiert werden (siehe hierzu Figur 4). Wenn die Stoffkonzentration des Filtrats über dem Filtratgrenzwert liegt ("ja"), erfolgt im Schritt 104 ein Ausgeben eines Warnsignals und/oder ein Stoppen des Filtrationsprozesses. Wenn die Stoffkonzentration des Filtrats nicht über dem Filtratgrenzwert liegt ("nein"), geht das Verfahren wieder zu Schritt 101 über, so dass weiterhin ein Untersuchen zumindest des Filtrats während des Filtrationsprozesses der Flüssigkeit mittels des filtratseitigen SPR-Sensors erfolgen kann.

Im Schritt 105 erfolgt ein Messen einer Stoffkonzentration des Unfiltrats mittels eines unfiltratseitigen SPR-Sensors. Es kann vorgesehen sein, dass für mehrere Stoffe jeweils die Stoffkonzentration des Unfiltrats gemessen wird.

Vorteilhafterweise werden für das Filtrat und das Unfiltrat jeweils die Stoffkonzentrationen für die gleichen Stoffe gemessen, so dass eine Differenzbestimmung der Stoffkonzentrationen und/oder eine Berechnung von Filtrat- und/oder Differenzgrenzwert möglich sind.

Im Schritt 106 erfolgen ein Ermitteln einer Differenz zwischen der Stoffkonzentration des Filtrats und der Stoffkonzentration des Unfiltrats und ein anschließendes Ermitteln, ob die Differenz über einem Differenzgrenzwert liegt. Der Differenzgrenzwert kann hierbei fest vorgegeben sein oder er kann anhand aktueller Messwerte aktualisiert werden (siehe hierzu Figur 4). Wenn die Differenz der Stoffkonzentrationen über dem Differenzgrenzwert liegt ("ja"), erfolgt im Schritt 104 ein Ausgeben eines Warnsignals und/oder ein Stoppen des Filtrationsprozesses. Wenn die Differenz der Stoffkonzentrationen nicht über dem Differenzgrenzwert liegt ("nein"), geht das Verfahren wieder zu Schritt 101 über, so dass weiterhin ein Untersuchen zumindest des Filtrats während des Filtrationsprozesses der Flüssigkeit mittels des filtratseitigen SPR-Sensors erfolgen kann.

Im Schritt 107 erfolgt ein Zugeben eines Tracers in das Unfiltrat. Als Tracer werden im Allgemeinen solche Stoffe angesehen, die bei intaktem Membranfiltrationsmodul vollständig im Unfiltrat verbleiben. Nur im Falle eines defekten Membranfiltrationsmoduls gelangt der Tracer in das Filtrat. Daher bietet die Zugabe eines Tracers in das Unfiltrat eine einfache und genaue Überprüfungsmöglichkeit der Funktionsfähigkeit des Membranfiltrationsmoduls.

Im Schritt 108 erfolgt ein Messen einer Tracerkonzentration des Filtrats mittels des filtratseitigen SPR-Sensors. Im Schritt 109 wird überprüft, ob die Tracerkonzentration des Filtrats ungleich Null ist.

Wenn die Tracerkonzentration des Filtrats ungleich Null ist ("ja"), erfolgt im Schritt 104 ein Ausgeben eines Warnsignals und/oder ein Stoppen des Filtrationsprozesses. Wenn die Tracerkonzentration des Filtrats nicht ungleich Null ist ("nein"), geht das Verfahren wieder zu Schritt 108 über, so dass weiterhin ein Messen der Tracerkonzentration des Filtrats erfolgen kann.

Figur 4 zeigt ein Verfahren zum Berechnen eines Filtrat- und/oder Differenzgrenzwerts. Durch das Messen der Stoffkonzentration des Filtrats mittels des filtratseitigen SPR-Sensors im Schritt 102 ist die Stoffkonzentration SK_{F} 110 bekannt, und durch das Messen der Stoffkonzentration des Unfiltrats mittels des unfiltratseitigen SPR-Sensors im Schritt 105 ist die Stoffkonzentration SK_{U} 111 bekannt
Im Schritt 112 erfolgt ein Berechnen eines Filtratgrenzwerts GW_{F} basierend auf der gemessenen Stoffkonzentration SK_{F} 110 des Filtrats und der gemessenen Stoffkonzentration SK_{U} 111 des Unfiltrats und/oder ein Berechnen eines Differenzgrenzwerts GW_{D} basierend auf der gemessenen Stoffkonzentration SK_{F} 110 des Filtrats und der gemessenen Stoffkonzentration SK_{U} 111 des Unfiltrats.

Im Schritt 113 erfolgt ein Verwenden des berechneten Filtratgrenzwerts GW_{F} und/oder des berechneten Differenzgrenzwerts GW_{D} für das Untersuchen 101 zumindest des Filtrats während des Filtrationsprozesses mittels des filtratseitigen SPR-Sensors.

## Patentansprüche

1. Verfahren zur Überprüfung der Funktionsfähigkeit eines Membranfiltrationsmoduls (3, 13) in einer Filtrationsanlage (1, 14)
**dadurch gekennzeichnet, dass**
zumindest ein Filtrat (4, 12) während eines Filtrationsprozesses einer Flüssigkeit mittels eines filtratseitigen Oberflächenplasmonenresonanz-Sensors (6), sogenannter SPR-Sensor, untersucht wird, das Verfahren weiter ein Messen (102) einer Stoffkonzentration (8, 15) mindestens eines Stoffes des Filtrats (4, 12) mittels des filtratseitigen SPR-Sensors (6) und ein Messen (105) einer Stoffkonzentration (7) mindestens eines Stoffes des Unfiltrats (2) mittels eines unfiltratseitigen SPR-Sensors (5) umfasst.

2. Verfahren nach Anspruch 1, das weiter ein Ermitteln (103) umfasst, ob die Stoffkonzentration (8) des Filtrats (4, 12) über einem Filtratgrenzwert liegt und wenn ja, Ausgeben (104) eines Warnsignals und/oder Stoppen des Filtrationsprozesses.

3. Verfahren nach Anspruch 1, das weiter ein Ermitteln (106) einer Differenz zwischen der Stoffkonzentration (8, 15) des Filtrats (4, 12) und der Stoffkonzentration (7) des Unfiltrats (2) und das weiter ein anschließendes Ermitteln (106) umfasst, ob die Differenz über einem Differenzgrenzwert liegt und wenn ja, Ausgeben (104) eines Warnsignals und/oder Stoppen des Filtrationsprozesses.

4. Verfahren nach Anspruch 1 oder 3, das weiter ein Berechnen eines Filtratgrenzwerts basierend auf der gemessenen Stoffkonzentration (8, 15) des Filtrats (4, 12) und der gemessenen Stoffkonzentration (7) des Unfiltrats (2) und/oder ein Berechnen eines Differenzgrenzwerts basierend auf der gemessenen Stoffkonzentration (8, 15) des Filtrats (4, 12) und der gemessenen Stoffkonzentration (7) des Unfiltrats (2) umfasst.

5. Verfahren nach Anspruch 4, das ein Verwenden des berechneten Filtratgrenzwerts und/oder des berechneten Differenzgrenzwerts für die Untersuchung zumindest des Filtrats (4, 12) während des Filtrationsprozesses mittels des filtratseitigen SPR-Sensors (6) umfasst.

6. Verfahren nach einem der Ansprüche 1 bis 5, das weiter ein Zugeben (107) eines Tracers (9) in das Unfiltrat (2) umfasst.

7. Verfahren nach Anspruch 6, das weiter ein Messen (108) einer Tracerkonzentration (11) des Filtrats (12) mittels des filtratseitigen SPR-Sensors (6) umfasst.

8. Verfahren nach Anspruch 7, das weiter ein Ausgeben (104) eines Warnsignals und/oder ein Stoppen des Filtrationsprozesses umfasst, wenn die gemessene Tracerkonzentration (11) ungleich Null ist.

9. Filtrationsanlage (1, 14) zum Durchführen des Verfahrens nach einem der Ansprüche 1 bis 8 mit einem Membranfiltrationsmodul (3, 13) und einem filtratseitigen SPR-Sensor (6) zum Überprüfen eines Filtrats (4, 12) während eines Filtrationsprozesses einer Flüssigkeit, wobei der SPR-Sensor als Matrix aufgebaut ist und daher dazu ausgelegt ist, mehrere verschiedene Stoffe zu detektieren, wodurch es möglich ist, eine Konzentration der mehreren Stoffe zu messen, und wobei die Filtrationsanlage weiter einen unfiltratseitigen SPR-Sensor (5) umfasst.

10. Abfüllanlage, insbesondere eine Getränkeabfüllanlage, mit der Filtrationsanlage (1, 14) nach Anspruch 9 und mit einer Abfüllmaschine zur Abfüllung von Behältern, insbesondere Getränkebehältern wie Fässern oder Flaschen, wobei die Abfüllmaschine und die Filtrationsanlage (1, 14) verbunden sind und wobei das Filtrat oder das aus dem Filtrat hergestellte Produkt, insbesondere Getränk, über ein Rohr aus der Filtrationsanlage (1, 14) der Abfüllmaschine zugeführt wird.

11. Abfüllanlage nach Anspruch 10, wobei die Abfüllmaschine ein um eine vertikale Drehachse rundlaufendes Karussell mit einer Vielzahl von baugleichen Abfüllstationen umfasst, die entlang des Umfangs des Karussells angeordnet sind.

## Claims

1. Method for checking functionality of a membrane filtration module (3, 13) in a filtration system (1, 14)
**characterised in that**
at least one filtrate (4, 12) is analysed during a filtration process of a liquid by a surface plasmon resonance sensor (6), so-called SPR sensor, on the filtrate side,
the method further comprises a measuring (102) of a substance concentration (8, 15) of at least one substance of the filtrate (4, 12) by the SPR sensor (6) on the filtrate side and a measuring (105) of a substance concentration (7) of at least one substance of the non-filtrate (2) by a SPR sensor (5) on the non-filtrate side.

2. Method according to claim 1, further comprising a determining (103) whether the substance concentration (8) of the filtrate (4, 12) exceeds a filtrate boundary value and, when yes, outputting (104) of a warning signal and/or stopping of the filtration process.

3. Method according to claim 1, further comprising a determining (106) of a difference between the substance concentration (8, 15) of the filtrate (4, 12) and the substance concentration (7) of the non-filtrate (2), and further comprising a subsequent determining (106), whether the difference exceeds a difference boundary value and, when yes, outputting (104) of a warning signal and/or stopping the filtration process.

4. Method according to claim 1 or 3, further comprising a calculating of a filtrate boundary value based on the measured substance concentration (8, 15) of the filtrate (4, 12) and the measured substance concentration (7) of the non-filtrate (2) and/or a calculating of a difference boundary value based on the measured substance concentration (8, 15) of the filtrate (4, 12) and the measured substance concentration (7) of the non-filtrate (2).

5. Method according to claim 4, comprising a using of the measured filtrate boundary value and/or the measured difference boundary value for analysing at least the filtrate (4, 12) during the filtration process by the SPR sensor (6) on the filtrate side.

6. Method according to one of claims 1 to 5, further comprising an adding (107) of a tracer (9) to the non-filtrate (2).

7. Method according to claim 6, further comprising a measuring (108) of a tracer concentration (11) of the filtrate (12) by the SPR sensor (6) on the filtrate side.

8. Method according to claim 7, further comprising an outputting (104) of a warning signal and/or a stopping of the filtration process when the measured tracer concentration (11) is not equal to zero.

9. Filtration system (1, 14) for carrying out the method according to one of the claims 1 to 8 with a membrane filtration module (3, 13) and a SPR sensor (6) on the filtrate side for checking a filtrate (4, 12) during a filtration process of a liquid, wherein the SPR sensor is constructed as matrix and thus is adapted to detect a plurality of different substance, whereby ist is possible to measure a concentration of the plurality of substances, and wherein the filtration system further comprises a SPR sensor (5) on the non-filtrate side.

10. Filling system, in particular a beverage filling system, with the filtration system (1, 14) according to claim 9 and with a filling device for filling containers, in particular beverage containers, such as barrels or bottles, wherein the filling device and the filtration system (1, 14) are connected and wherein the filtrate or the product made from the filtrate, in particular beverage, is provided from the filtration system (1, 14) to the filling device by a tube.

11. Filling system according to claim 10, wherein the filling device is a carousel rotating about a vertical rotation axis, the carousel comprising a plurality of identical filling stations being arranged along the periphery of the carousel.

## Revendications

1. Procédé de contrôle de la fonctionnalité d'un module de filtration à membrane (3, 13) dans une installation de filtration (1, 14)
**caractérisé en ce que**
au moins un filtrat (4, 12) est examiné pendant un processus de filtration d'un liquide au moyen d'un capteur de résonance plasmonique de surface (6) du côté du filtrat, appelé capteur SPR, le procédé comprend en outre la mesure (102) d'une concentration de substance (8, 15) d'au moins une substance 10 du filtrat (4, 12) au moyen du capteur SPR côté filtrat (6) et en mesurant (105) une concentration de substance (7) tte^au moins une substance du non-filtrat (2) au moyen d'un capteur SPR côté non-filtrat (5).

2. Procédé selon la revendication 1, qui comprend en outre la détermination (103) si la concentration en substance (8) du filtrat (4, 12) est supérieure à une valeur limite du filtrat et, si c'est le cas, l'émission (104) d'un signal d'avertissement et/ou l'arrêt du processus de filtration.

3. Procédé selon la revendication 1, qui comprend en outre la détermination (106) d'une différence entre la concentration en substance (8, 15) du filtrat (4, 12) et la concentration en substance (7) du non-filtrat (2) et qui comprend en outre la détermination ultérieure (106) si la différence est supérieure à une valeur limite différentielle et, si c'est le cas, l'émission (104) d'un signal d'avertissement et/ou l'arrêt du processus de filtration.

4. Procédé selon les revendications 1 ou 3, qui comprend en outre le calcul d'une valeur limite de filtrat basée sur la concentration de substance mesurée (8, 15) du filtrat (4, 12) et la concentration de substance mesurée (7) de l'unfiltrat (2) et/ou le calcul d'une valeur limite de différence fondée sur la concentration de substance mesurée (8, 15) du filtrat (4, 12) et la concentration de substance mesurée (7) de l'unfiltrat (2).

5. Procédé selon la revendication 4, qui comprend l'utilisation de la valeur limite calculée du filtrat et/ou de la valeur limite différentielle calculée pour l'examen d'au moins le filtrat (4, 12) pendant le processus de filtration au moyen du capteur SPR côté filtrat (6).

6. Procédé selon l'une quelconque des revendications 1 à 5, qui comprend en outre l'ajout (107) d'un traceur (9) 5 au non-filtrat (2).

7. Procédé selon la revendication 6, qui comprend en outre la mesure (108) d'une concentration de traceur (11) du filtrat (12) au moyen du capteur SPR (6) situé du côté du filtrat.

8. Procédé selon la revendication 7, qui comprend en outre la production (104) d'un signal d'avertissement et/ou l'arrêt du processus de filtration lorsque la concentration de traceur mesurée (11) n'est pas égale à zéro.

9. Installation de filtration (1, 14) pour la mise en oeuvre du procédé selon l'une quelconque des revendications 1 à 8, comprenant un module de filtration à membrane (3, 13) et un capteur SPR (6) côté filtrat pour la surveillance d'un filtrat (4, 12) pendant un processus de filtration d'un liquide, dans lequel ledit capteur SPR est construit comme une matrice et est donc adapté pour détecter une pluralité de substances différentes, permettant ainsi de mesurer une concentration de ladite pluralité de substances, et dans lequel ledit système de filtration comprend en outre un capteur SPR latéral non filtré (5).

10. Installation de remplissage, en particulier installation de remplissage de boissons, avec l'installation de filtration (1, 14) selon la revendication 9 et avec une machine de remplissage pour remplir des récipients, en particulier des récipients à boissons tels que des fûts ou des bouteilles, la machine de remplissage et l'installation de filtration (1, 14) étant reliées et le filtrat ou le produit fabriqué à partir du filtrat, en particulier la boisson, étant amené à la machine de remplissage par l'intermédiaire d'un tuyau de l'installation de filtration (1, 14).

11. Installation de remplissage selon la revendication 10, dans laquelle la machine de remplissage comprend un carrousel tournant autour d'un axe de rotation vertical et ayant une pluralité de stations de remplissage identiques disposées le long de la circonférence du carrousel.
